# EUROPEAN PATENT SPECIFICATION

(11) **EP 2 429 931 B1**
(45) Date of publication and mention of the grant of the patent: **31.12.2014**
(21) Application number: 09788132.0
(22) Date of filing: 15.05.2009
(51) Int. Cl.: B65B 11/02, B65B 35/16, B65B 35/50, B65G 57/03, B25J 9/00, B25J 9/02, B25J 15/06

(54) **PACKING APPARATUS**
VERPACKUNGSMASCHINE
MACHINE D'EMBALLAGE

(43) Date of publication of application: 21.03.2012
(73) Proprietor: Wals Systems B.V., 3768 GA Soest (NL)
(72) Inventor: WALS, Cornelis, NL-3768 GA Soest (NL)
(74) Representative: Ferguson, Alexander
(86) International application number: PCT/NL2009/000115
(87) International publication number: WO 2010/131945

(56) References cited:
- EP-A1- 0 146 643
- DE-A1- 3 009 361
- DE-A1- 3 417 736
- DE-U1- 9 311 247
- US-A- 4 058 225

## Description

### BACKGROUND OF THE INVENTION

The invention relates to a packaging arrangement with which objects are stacked on and/or are removed from a supporting member, such as a pallet or a roller container. The invention furthermore regards a method relating thereto.

After stacking, said objects can be tied (secured) to the supporting member by means of a flexible, supple web material, that may for instance be sheet-shaped, such as a (stretch) foil, or net/gauze-shaped, that is wrapped around the supporting member and the stack by a (stretch) wrapper.

It is known to use a so-called portal robot for picking up objects, such as boxes, trays, bundled material, crates, cases, baking trays, plates, etcetera, from a supply and stacking them one by one, in layers on a pallet placed on a roller track in the loading position, and after the stack has been completed moving the stack to a next frame spaced apart therefrom and to secure it there with foil by means of a foil dispenser moving around the stack, which dispenser circulates about a guide ring moving vertically in the frame.

The robot is positioned in the first (stacking) station on a carriage on which the robot is able to move in X-direction, whereas the carriage itself can be moved in Y-direction. The robot is provided with a gripper having clamps, suction cups and/or a scoop and can be moved with respect to the carriage in Z-direction.

In a first known embodiment, the pallets are removed from a stacked store of pallets by a separate robot and placed on a conveyance track, over which the pallets are moved to within the frame, to a low loading position.

In a second known embodiment one pallet at a time is dispensed from a stacked store to a conveyance track leading to a low loading position, wherein the dispensing takes place by lifting the stack of the pallets situated on top of it by means of lifting fingers. The lifting fingers have to be controlled such that deviations in pallet height are taken into account.

EP-A-0.146.643 discloses an apparatus as described in the precharacterizing portion of claim 1.

It is an object of the invention to provide a simple packaging arrangement and method of the type mentioned in the preamble.

It is an object of the invention to provide a packaging arrangement and method of the type mentioned in the preamble that takes up a limited horizontal space.

It is an object of the invention to provide an efficiently working packaging arrangement or efficient packaging method, respectively, of the type mentioned in the preamble.

It is an object of the invention to provide a packaging arrangement and method of the type mentioned in the preamble for which a limited number of moving parts suffice for it to work.

For achieving at least one of these objects the invention, according to one aspect, provides an apparatus for placing and/or removing a quantity of objects, such as boxes, on or from, respectively, a supporting member, such as a pallet, as described in claim 1.

In that way the pick-up member with which the objects are placed on the supporting member, such as a pallet, is also used for placing said supporting member in the loading position. The pick-up member is able to engage the pallet and the like to be placed, from above, wherein the actual height of said pallet is less relevant. Moreover, said pick-up member can be used to place a next pallet on an already made package of previous pallet and objects placed thereon, for making a second package on the first package, the so-called doubling or dualling. The necessary vertical stroke of the pick-up member can be kept limited, as a result of which speed is gained. The pallet and the objects will be subjected to a downward movement through the carrier/guide, optionally when they are still engaged by the pick-up member, and otherwise when they are -directly or indirectly-supported on the second support.

In one embodiment the apparatus is provided with a first lifting device for lifting or lowering, respectively, the first support. In that way the stack of supporting members can be brought closer to the pick-up member, so that the vertical stroke for the pick-up member when picking up the upper pallet can remain limited, as a result of which the vertical occupation of space can be kept limited and the speed is increased. Each time after picking up the at that moment upper pallet, the first support can be lifted by approximately one pallet height.

The first lifting device may be adapted for lifting the first support up into the upper half (upper area) of the frame, in other words up to a height over halfway the length of the adjacent uprights, for instance up to a height of approximately 2/3 of the length of the adjacent uprights. In that way the lowermost pallet will also be presented to the pick-up member at an efficient height.

The second support will be liftable to near the carrier/guide ring. The second lifting device is adapted for lifting the second support up into the upper half (upper area) of the frame, in other words up to a height over halfway the length of the adjacent uprights, preferably up to a height of approximately 2/3 of the length of the adjacent uprights.

In an arrangement that is also compact in horizontal sense, the first and second work station are situated within the uprights. Alternatively the guides may extend to outside of the uprights, in which case a work station may be situated outside of the uprights.

The carrier/guide can be situated at approximately 2/3 of the length of the adjacent uprights.

The vertical occupation of space can be kept limited when the apparatus comprises a supply for presenting the objects to the pick-up member at a location that is situated in the upper half of the frame (upper area), for instance at a height of approximately 2/3 of the length of the adjacent uprights, preferably leaving free a horizontal passage for the pick-up member with a supporting member retained by it, optionally taking an object situated on and supplied over the supply track into account. As the vertical stroke when picking up the objects is thus limited, working speed is thus also gained.

In a compact embodiment the supply ends at a location that is substantially located between the first and the second work stations.

For a quick operation of the pick-up member it may comprise suction cups. They may have walls of cellular synthetic material. The material of the walls is such that sufficient contact with the surface to be engaged, in case of pallets often wood, is realised for a correct functioning of the suction cup. The number and the suction surface of the suction cups is adapted to the weight of the supporting member to be moved, for a pallet for instance 25-35 kg.

The apparatus need not be limited to only one first work station and one second work station The apparatus may for instance be provided with two first work stations having their own first support and one second work station, wherein the pick-up member is able to reach all work stations.

According to a further aspect the invention provides a method for placing a quantity of objects on a supporting member, such as a pallet, as described in claim 10.

In one embodiment thereof prior to step j the first support is lifted, preferably over one height of the supporting member.

Wrapping the package may take place in portions, adjusted to forming each layer of objects. Wrapping then takes place in (just before, just after and/or during) step g, preferably during step g.

As already discussed above, wrapping takes place using a wrapper circulating on a stationary guide, wherein each supporting member is moved from the top down through the guide.

For making aforesaid double or dual packages, after step h the at that moment upper, next, supporting member is picked up from the stacked store using the pick-up member and placed on the top layer of objects of the package formed, after which the steps e-h are repeated for on the previously formed package, forming a next package with said next supporting member. Step i is then carried out after the multiple package is ready.

In case the package is wrapped the next supporting member can be placed on the preceding package after its top layer has been wrapped and wherein the web-shaped material is interrupted. Thus the envelopment does not continue uninterrupted over the double package, as a result of which the upper package, when at the purchaser's, can easily be separated from the bottom package.

Accordingly, the method results in an assembled package of at least two superposed supporting members, such as pallets, having stacked objects, such as boxes, on each supporting member, wherein each supporting member having objects stacked thereon forms a package wrapped in its own individual length of web-shaped material.

In one embodiment the penultimate lowermost supporting member supports on the top layer of objects of the package including the lowermost supporting member.

In a further development of the apparatus according to the invention it can be provided with control means for activating the drive means for lowering the support stepwise. The control means can also be adapted for activating the wrapping device for a circulation in register with the activation of the drive means for the support. Wrapping then always takes place per layer, so that the newly formed layer of objects is secured to the stack as soon as possible after placement. Both activations can at least partially coincide, thus realising a helical foil wrap.

In a further development of said apparatus the control means are adapted for activating the wrapping device for a circulation in register with the activation of the drive means for the support, during the activation by the control means of the placement means in making a next layer of objects. In this way time is gained.

The speed of forming the lowermost layer of objects can be improved when the drive means are adapted for lifting the support so far that the supporting member extends within the carrier/guide.

In one embodiment the carrier/guide of the wrapping device is circular and the support is positioned for keeping the supporting member centric with respect to the carrier/guide.

The pick-up member according to the invention used in various embodiments described above can be movable in X, Y and Z direction, preferably also rotatable about a vertical axis line, wherein one or more of said displacement or rotation movements may take place simultaneously, thus for instance simultaneously in Y and Z direction. The drive for the pick-up member is then provided with servo-controlled electromotors for each X, Y and Z movement and rotation movement. Said motors may be simultaneously effective.

It is noted that a layer may also consist of one object only, for instance a tray of products, which tray will then approximately have the horizontal dimensions of the pallet.

The various embodiments according to the invention described above need not only be applicable for loading pallets and the like, but may also be used the other way round in unloading packages of pallets having objects loaded thereon. For instance in the embodiments with a first support for a store of pallets, said store can also be built up the other way round, wherein in the second work station the package is unloaded layer by layer and the supply is used as discharge. The pick-up member transfers an empty pallet from the lifted second support to the lifted first support.

It is a noted that in US 5.203.671 a packaging arrangement is shown in which a robot picks up the objects from a surface situated at a low level. As a result thereof the vertical axle of the robot has to be relatively long, because of which the work space also needs to be high.

DE 93 11 247 shows an arrangement in which no robot is present, but wherein from a high conveyor, from the side, the objects are brought above the pallet by means of a slide, which is then retracted in a direction towards the supply.

EP 0.561.098 shows an arrangement in which a robot is not present either. The objects are in this case also slid from a high conveyor to above the pallet, over a roller track, which is then retracted, in a direction away from the supply.

DE 34 17 736 discloses an order picking apparatus, comprising a robot having a central column which is rotatable about a vertical axis and which carries a telescoping robot arm. At its outer end, the robot arm is provided with a gripper having suction cups. In operation, the robot transfers articles present on a number of different storage pallets onto a single transport pallet. Emptied storage pallets are transferred by the robot onto a stack of empty storage pallets.

The aspects and features described in this description and the claims of the application and/or shown in the drawings of this application may where possible also be used individually. Said individual aspects may be the subject of divisional patent applications relating thereto. This particularly applies to the features and aspects that are described per se in the sub claims.

### BRIEF DESCRIPTION OF THE DRAWINGS

The invention will be elucidated on the basis of a number of exemplary embodiments shown in the attached drawings, in which:
Figure 1A shows a front view of a first exemplary embodiment of a packaging apparatus;
Figure 1B shows a top view of the packaging apparatus of figure 1A;
Figure 2A shows a side view of the packaging apparatus of figures 1A and 1B at the start of a packaging process;
Figure 2B shows a front view of the packaging apparatus of figure 2A;
Figure 3 shows a side view of the packaging apparatus of the preceding figures, during making a first layer of objects on a pallet;
Figure 4 shows a side view of the packaging apparatus of the preceding figures, during making a second layer of objects on a pallet;
Figure 5 shows a front view of the packaging apparatus of the preceding figures, during completing the packaging process;
Figures 6A,B show a front view and a top view, respectively, of an exemplary embodiment of a packaging apparatus according to the invention;
Figures 6C-F show consecutive steps in the operation of the apparatus of figures 6A,B; and
Figures 6G-I show consecutive steps in an alternative operation of the apparatus of figures 6A,B.

### DETAILED DESCRIPTION OF THE DRAWINGS

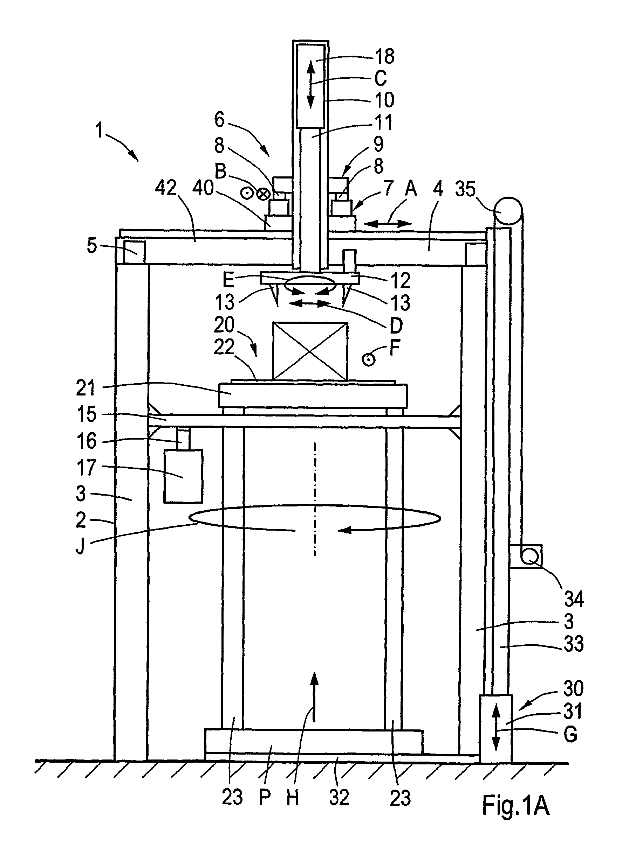

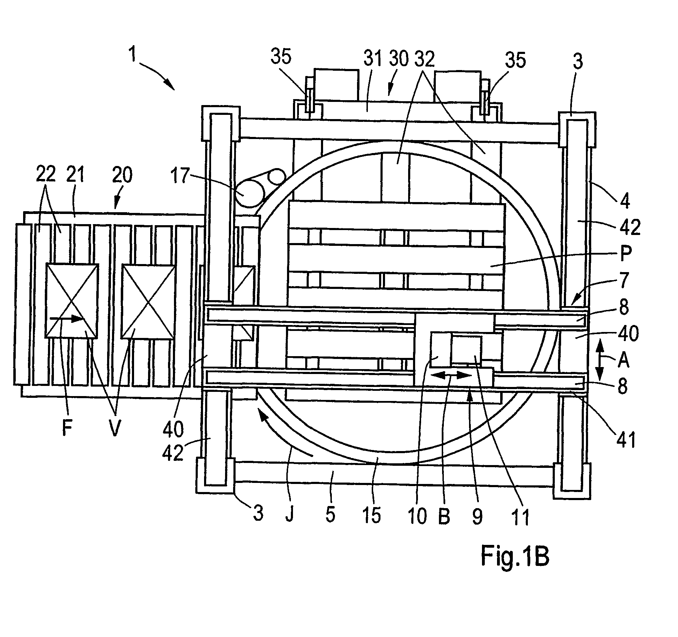

The packaging apparatus 1 shown in figures 1A and 1B comprises a portal frame 2 placed on a basis or bottom 100, which portal frame has uprights or columns 3 and beams 4 and 5 connecting the columns 3 to each other. A main carriage 7 is supported on the beams 4, which carriage comprises two carriers 40 and two girders 41, which as one unity, using means that are not further shown, are movable in a driven manner in the directions A (figure 1 B) over the rails 42 on the beams 4. The girders 41 each carry a rail 8, on which an auxiliary carriage 9 is movable in a driven manner in the directions B (figure 1B). The auxiliary carriage 9 supports a robot 6, provided with a vertical guide 10 along which a lifting unit 18 is movable in a driven manner in directions C, which lifting unit carries a vertical robot arm 11. At the lower end of the robot arm 11 a rotatable (directions E) pick-up unit 12 has been arranged, provided with clamps 13 that are movable in a driven manner in directions D. A packaging apparatus built up in that way is generally known and is also called a portal robot. The robot used in that case, however, is then adapted for picking up objects from the bottom and placing them on a pallet placed on the bottom and thus continue stacking.

The electromotors for the main carriage 7 (direction A), the auxiliary carriage 9 (direction B), the lifting unit 18 (direction C), and the pick-up member 12 (for rotation, direction E) are servo-controlled and can at least partially be simultaneously effective.

At the columns 3 in an upper area of the portal 2, over half the length of the columns, such as at approximately 2/3 of their length above the basis, a support/guide ring 15 is arranged so as to be stationary, along which a carriage 16 with foil dispenser 17 can circulate in a driven manner, while dispensing a web S of foil material or other sheet material to a group of objects positioned within said circumferential path.

At the location of the ring 15 a supply track 20 extends to within the space enclosed by the portal 2, which supply track 20 has been provided with driven rollers 22 that are rotatably supported in frame 21 for conveyance of objects V in the direction F. The supply track is adapted for passing objects V, such as boxes, from the bottom 100 or a support surface positioned thereon upwards to a location within the portal 2, in an upper area thereof, (over half the length of the columns, such as at approximately 2/3 of their length above the basis), where the robot 6 is able to pick up the objects.

The apparatus 1 has furthermore been provided with a support device 30 having a support holder 31 and a support part 32, in this example designed as three fork arms for supporting a pallet P. It will be clear that the support device 30 can also be designed to support other carriers for objects, such as for instance roller containers of which the walls have first been removed. The support holder 31 can be moved up and down along upright guides 33 by means of motors/winches 34 and cables, belts, chains and the like 36 in the directions G, which upright guides at the upper end have been attached to a beam 5 and at that location have been provided with a pulley 35. Of course other ways of driving are possible.

For controlling the various drives a centrally programmable control unit that is not further shown has been provided.

A packaging cycle can be carried out as follows using the packaging apparatus 1.

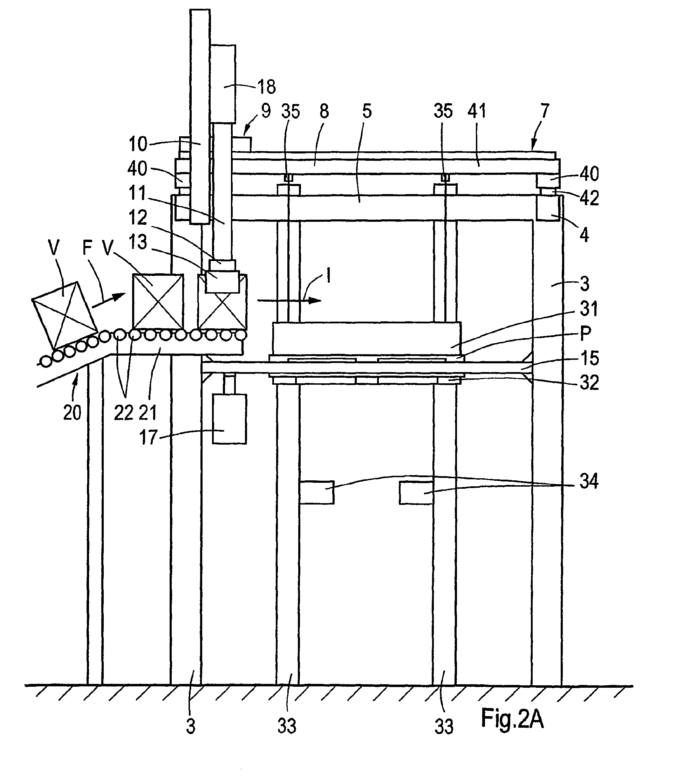

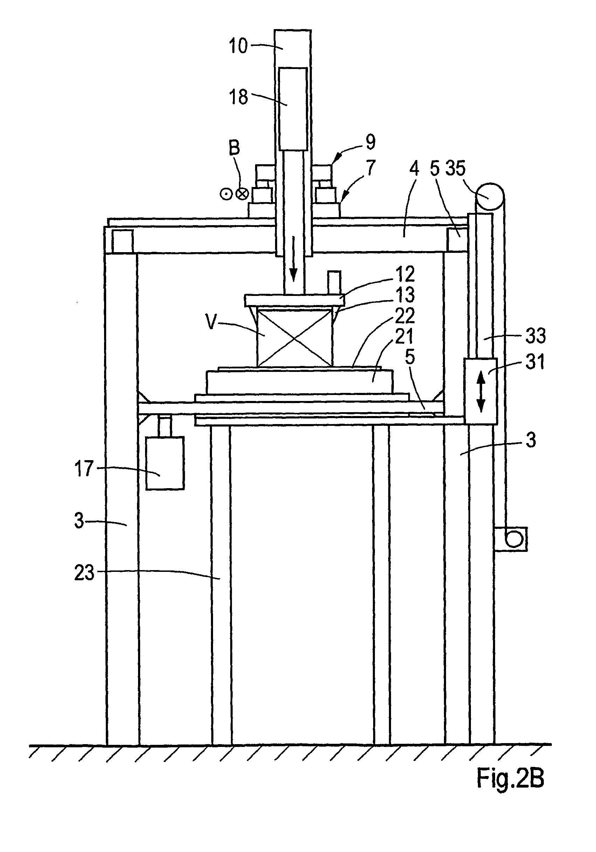

By means of a fork-lift truck or via a roller track a pallet P is placed on a support part 32 so as to be centred with respect to the ring 15. The support holder 31 including support part 32 and pallet P is subsequently lifted in direction H until the support part has been taken to just below the ring 15 (figures 2A and 2B).

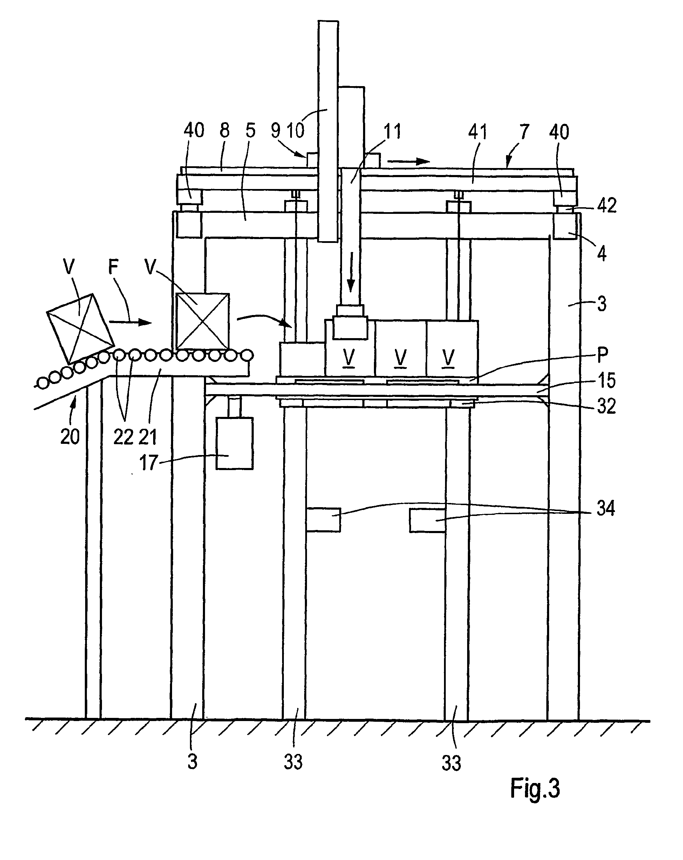

The boxes V have been supplied to within the frame 2 and within the reach of the robot 6 by the supply track 20. The robot 6 is operated for by means of the pick-up member 12 and its clamps 13 clamping and picking up the foremost box or group of boxes V. The pick-up member 12 is moved slightly upwards by the lifting unit 18 and by operating the auxiliary carriage 9 and the main carriage 7 brought above the right location on the pallet (direction I). The lifting unit 18 lowers the pick-up member 12 again to place the box V on the pallet P. The clamps 13 are then opened and the pick-up member 12 is taken back again to pick up a next box or group of boxes V. In this way a first layer of boxes (figure 3) is made on the pallet P.

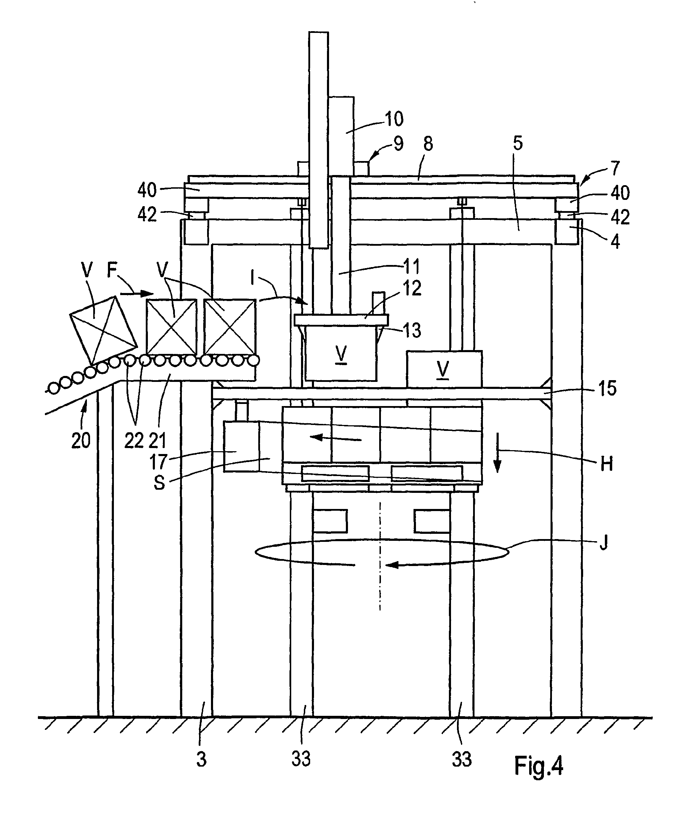

After the first layer has been completed the support holder 13 and thus the support part 32 and the pallet P are lowered over a certain distance, until in the position of figure 4. The free end of the foil web S is secured to the pallet P and the carriage 16 with dispenser 17 are brought into circulation along the guide 15 to envelop/secure the first layer and the pallet with the foil web S. It may be that a packaging of only one layer of boxes V is wanted, in which case the process can be ended. When a package of several layers of boxes V is wanted, the robot 6 is meanwhile operated to place the next layer of boxes on the first layer. Wrapping a first layer and forming a second layer situated thereon can thus at least partially coincide. When the second layer is completed the support holder 31 is lowered over one layer height and the previous process is repeated. The carriage 16 with dispenser 17 can optionally be brought into circulation during said lowering, in which case a helical wrap is achieved, or immediately consecutive thereto. During lowering the pick-up member can also be operated for forming the next layer.

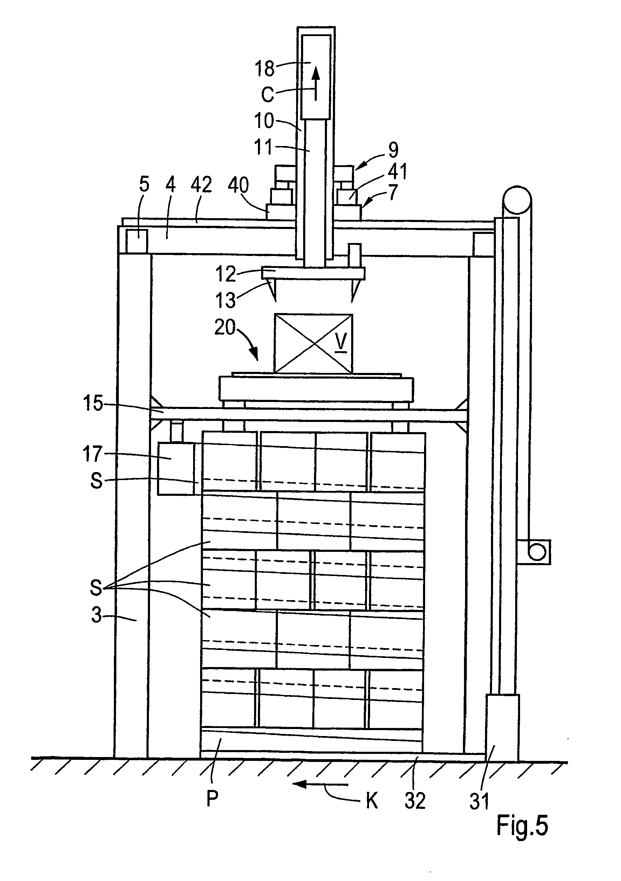

This cycle is repeated until the stack of boxes on the pallet P has reached the wanted height and also the top layer of boxes has been secured to the layer of boxes situated underneath it (figure 5) by wrapping with the foil web S.

The support holder 31 has then arrived at the bottom 100 and with a fork-lift truck or other suitable means the assembly of pallet P and stack of boxes V can be lifted from the support part 32 and discharged (W). For a next packaging cycle a new pallet P is placed on the support part 32.

Due to the limited vertical displacement of the pick-up member 12 the vertical guide 10 can remain limited as regards length, and as a result so can the overall height of the apparatus 1.

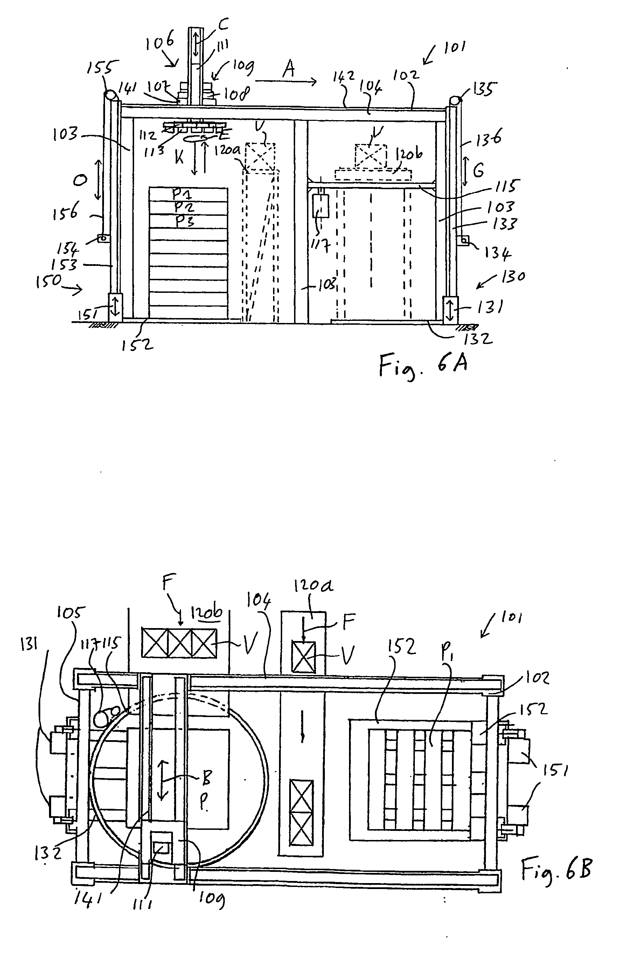

The packaging apparatus 101 in the figures 6A-I comprises many of the parts of the packaging apparatus of figures 1-5. For similar or comparable parts the same reference numbers have been used increased by 100.

The frame 102 has been extended in horizontal direction, to offer room to a (first) work station where a first support 152 has been accommodated. The first support 152 is held by a support holder 151 and in this example is designed like a plate for supporting a pallet P or for instance said roller container of which the walls have first been removed. The support holder 151 can be moved up and down along upright guides 153 by means of motors/winches 154 and cables, belts, chains and the like 156 in the directions O, which upright guides at the upper end have been attached to a beam 105 and at that location have been provided with a pulley 155. Of course other ways of driving are possible.

The support/guide ring 115 for the foil dispenser 117 is arranged to the columns so as to be stationary, at a level over halfway the length of the columns 103, that means in the upper area of the frame, for instance at approximately 2/3 of the column length from the basis. In figure 6B (NB: turned with respect to figure 6A), to illustrate this a pallet P has been shown on the second support 132, centred with respect to the guide ring 115. The pallet P is able to pass through the ring 115.

At approximately the same level supply tracks 120a,b have been drawn, wherein supply track 120b corresponds with supply track 20 of figures 1-5. When the apparatus 101 is designed with supply track 120b the horizontal distance between the guide ring 115 and the first work station can be smaller. When an apparatus 101 is selected having supply track 120a the latter may alternatively be situated low, although this may be disadvantageous to the necessary operation height of the robot 106, which after all in that case has to be able to make a longer vertical stroke.

The robot 106 is provided with a pick-up unit 112 provided with suction cups 113. As regards suction surface they are adapted to the weight and surface of the supporting member to be moved, such as a pallet, which usually will be larger than the surface of the objects to be picked up. Preferably the suction cups have walls of material that adjusts to the surface texture of the supporting member to be picked up, such as a pallet. When instead of suction cups other engagement means are used, such as in direction D (figure 1A) adjustable clamps or a gripper, the maximum distance the clamping members are able to take with respect to each other will be adjusted to the width or length of the supporting member.

In the further discussion of the operation of the apparatus 101 a supply 120a that is situated high will be taken as starting point.

For the control of the various drives a centrally programmable control unit that is not further shown has been provided.

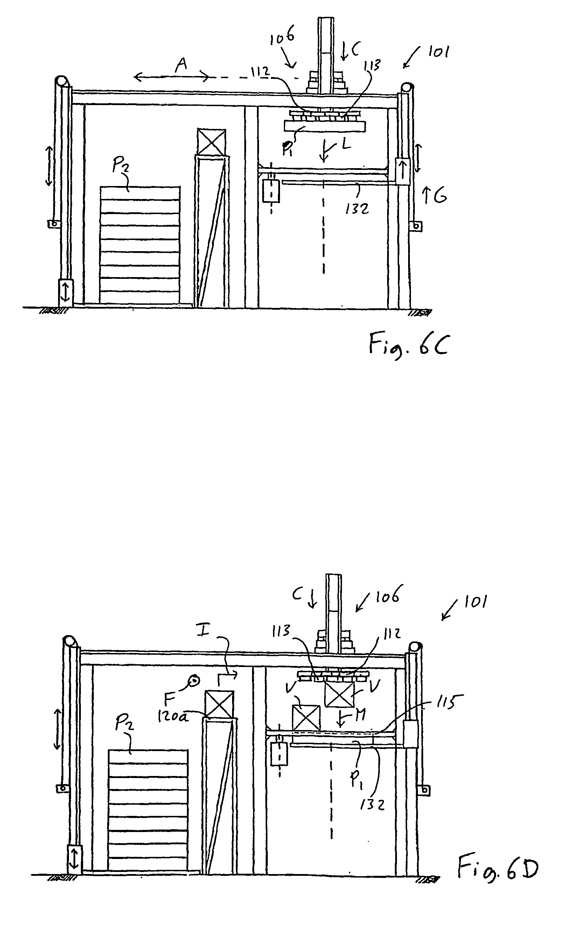

With the robot 106, in the first work station the upper surface of the upper pallet P1 of the stack of pallets resting on the first support 152 is sucked onto and picked up by the suction cups 113, subsequently taken over the supply track 120a to above the second work station, above the guide ring 115. Simultaneously the second support 132 has been lifted, direction G, to just below the guide ring 115. The robot 106 is operated for lowering the pick-up unit 112, direction L, putting down the pallet P1 on the second support 132, and then releasing it (figure 6C). The pallet P1 can in that case optionally extend vertically to within or slightly above the ring 115.

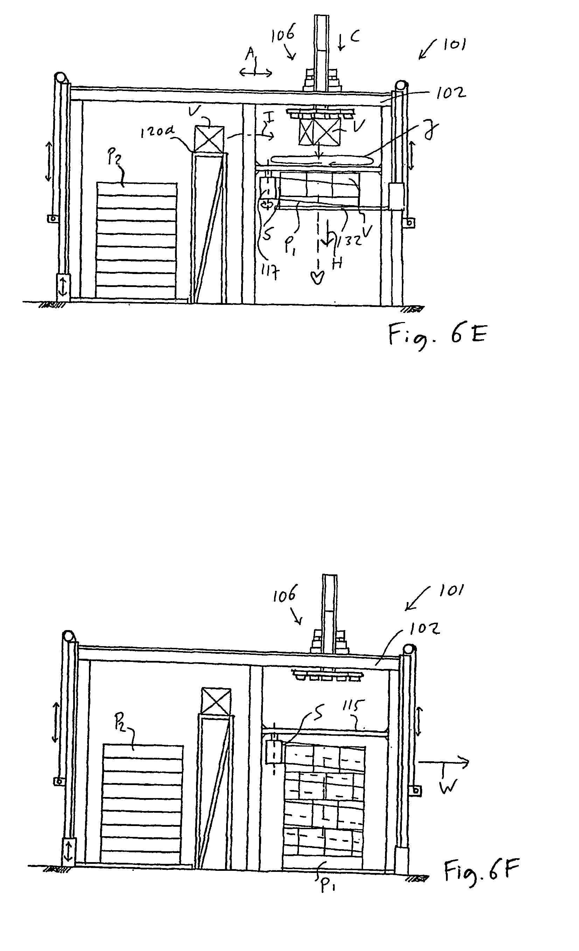

Subsequently (figure 6D) the robot 106 is moved to above the supply track 120a in order to pick up a box V with the pick-up unit 112, using the suction cups 113. The suction cups 113 that remain outside of the box V are temporarily kept inoperative using a usual provision in order to prevent that false air is sucked in. Then the box V is placed according to direction I over the guide ring 115 onto the pallet P1, at the desired location. These actions are repeated until a first, bottom layer of objects V has been formed on the pallet P1. By operating the support device 130 the second support is then lowered over one height of an object or layer, while having the foil dispenser 117 circulate (direction J), in order to wrap said layer in the foil, figure 6E. Meanwhile the robot 106 picks up a next object V that is subsequently placed on the first layer of objects. Then a second layer of objects is formed.

When the second support has arrived at the bottom, figure 6F, the top layer of objects has also been enveloped by the foil web S and said web is cut through and secured. The now completed package is discharged in direction W. After that the second support 132 is moved upward again to the position of figure 6C.

The robot meanwhile picks up a next pallet P2 in the first work station, and moves it over the supply track 120a, wherein the height of the supply track 120a is such with respect to the beams 104 that the pallet P2 is able to move over an object situated on the supply track 120a. The objects is then placed on the support 132, after which a next package is made. Prior to the pallet P2 being picked up by operation of the support device 150, the first support 152 has been lifted over one pallet height, so that the upper surface of the pallet P2 is at approximately the same height as where the upper surface of pallet P1 used to be.

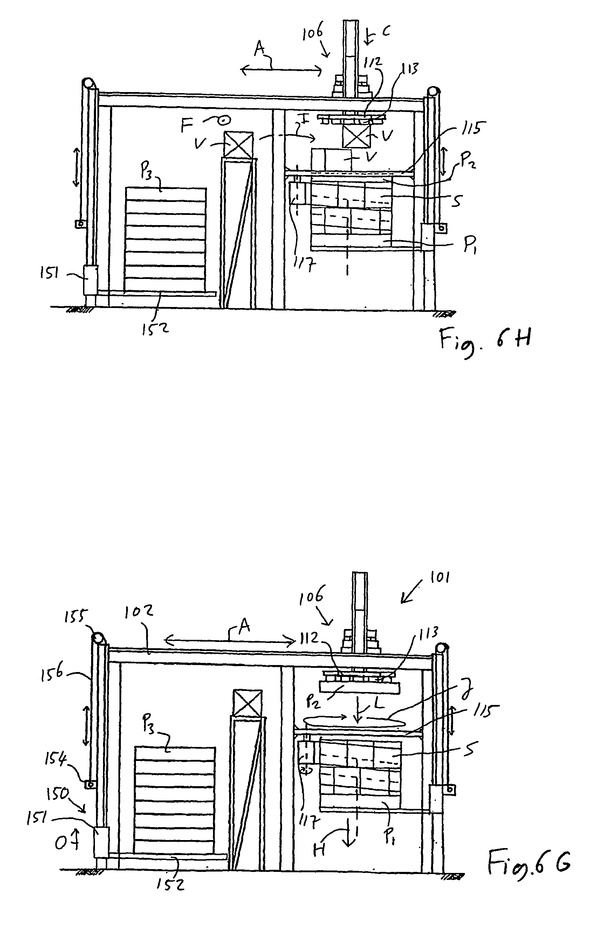

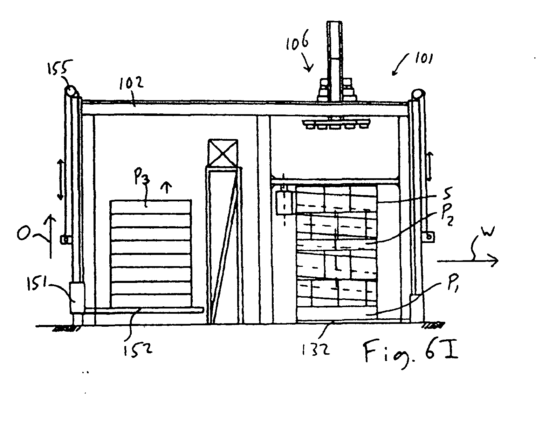

It is also possible to make so-called double or dual packages. As shown in figure 6G, after completing a first package, on pallet P1, and cutting through the web S and securing it to said first package, the pick-up unit 112 places the next pallet P2 on the top layer of objects of the first package. After that, figure 6H, stacking takes place on pallet P2 in the manner described above. The end of the foil web S is secured to pallet P2 and the foil web S, when lowering the second support 132, is wrapped around the first layer of objects V on pallet P2 in order to secure it to said pallet. Finally the situation of figure 6I is reached, the foil web S is cut through and with the end secured to the upper, second package, after which the double package is discharged, direction W. In that condition the double package can be transported by lorry to the purchaser.

The purchaser can immediately and easily remove the upper package from the bottom package using a fork lift truck and placing it next to the other or taking it elsewhere.

The above description is included to illustrate the operation of preferred embodiments of the invention and not to limit the scope of the invention. Starting from the above explanation many variations that fall within the scope of the present invention will be evident to an expert.

## Claims

1. Apparatus (101) for placing or removing, respectively, a quantity of objects, such as boxes, on and/or from a supporting member, such as a pallet (P), comprising a frame (102) having uprights and beams supported by the uprights, wherein the beams support a guide for a carriage (109) on which a placement device (106) has been arranged, wherein the guide extends according to a path situated over at least one first work station and at least one second work station situated horizontally spaced apart from the first work station, wherein at the location of the at least one first work station the apparatus comprises a first support (152) for a stack of supporting members and at the location of the at least one second work station it comprises a second support (132) for a supporting member, **characterised in that** the placement device (106) comprises a pick-up member (112) for the objects for picking up the objects from a supply (120b) and placing them on a supporting member (P) or a layer of objects previously placed thereon,
or removing them therefrom and transferring them to a discharge, respectively, wherein the pick-up member is movable in X, Y and Z direction and is adapted for retaining a supporting member during displacement from the stack of supporting members to the second support and vice versa, respectively, and **in that** at the location of the second work station the apparatus is provided with a wrapping device (117) for with a web-shaped material, such as a foil or the like, securing and enveloping the objects on the supporting member carried by the second support (132), and a carrier/guide (115) for the wrapping device carried by the frame which carrier/guide defines a circumferential path along which the wrapping device circulates, wherein, the apparatus is provided with a second lifting device (131) for lifting the second supports, wherein the carrier/guide has been arranged in the frame so as to be stationary, wherein the carrier/guide is situated in the upper half of the frame (upper area) and wherein the second lifting device is adapted for lifting the second support up into the upper half of the frame (upper area).

2. Apparatus according to claim 1, provided with a first lifting device for lifting or lowering, respectively, the first support, wherein, preferably, the first lifting device is adapted for lifting the first support up into the upper half (upper area) of the frame, for instance up to a height of approximately 2/3 of the length of the adjacent uprights.

3. Apparatus according to claim 1 or 2, wherein the second lifting device is adapted for lifting the second support up to a height of approximately 2/3 of the length of the adjacent uprights.

4. Apparatus according to any one of the preceding claims, wherein the first and second work stations are situated within the uprights.

5. Apparatus according to any one of the preceding claims, wherein the carrier/guide is situated up to a height of approximately 2/3 of the length of the adjacent uprights.

6. Apparatus according to any one of the preceding claims, comprising a supply for presenting the objects to the pick-up member at a location that is situated in the upper half of the frame (upper area), for instance at a height of approximately 2/3 of the length of the adjacent uprights, preferably leaving free a horizontal passage for the pick-up member with a supporting member retained by it.

7. Apparatus according to any one of the preceding claims, wherein the supply ends at a location that is substantially located between the first and the second work stations.

8. Apparatus according to any one of the preceding claims, wherein the pick-up members comprise suction cups.

9. Apparatus according to any one of the preceding claims, two or more first work stations having their own first supports being present.

10. Method for placing a quantity of objects on a supporting member, such as a pallet, comprising the following steps:
a. keeping a stacked store of supporting members ready on a first support;
b. keeping a second support for a supporting member ready at a first distance above a solid basis, which second support is horizontally spaced apart from the first support;
c. picking up the upper, first supporting member from the stacked store using a driven pick-up member which is movable in X, Y and Z direction;
d. transferring the first supporting member to the second support using the pick-up member and placing the first supporting member on the second support;
e. picking up one or more of the objects from a supply using the pick-up member, transferring said objects to the first supporting member on the second support using the pick-up member and placing said objects on the first supporting member;
f. carrying out step e until a wanted layer of objects has been formed on the first supporting member;
g. lowering the second support over a certain height;
h. repeating steps e, f and g insofar as the formation of subsequent layers of objects is necessary for forming an intended first package of first supporting member and objects stacked thereon;
i. removing the first package from the second support;
j. picking up the at that moment upper, next supporting member from the stacked store using the pick-up member;
k. repeating steps d-i for forming a package with said next supporting member;
l. repeating steps j and k for each next package to be made,
wherein the package prior to being removed from the second support in step i, is wrapped in a web-shaped material, such as a foil, wherein, preferably, wrapping the package takes place in portions, adjusted to forming each layer of objects, wherein, preferably, wrapping takes place in step g, preferably during step g,
wherein wrapping takes place using a wrapper circulating on a stationary guide, and
wherein each supporting member moves from the top down through the guide.

11. Method according to claim 10, wherein prior to step j the first support is lifted, preferably over one height of the supporting member.

12. Method according to any one of the claims 10 or 11, wherein after step h the at that moment upper, next, supporting member is picked up from the stacked store using the pick-up member and placed on the top layer of objects of the package formed, after which the steps e-h are repeated for on the previously formed package, forming a next package with said next supporting member, wherein, preferably, step i is carried out after the multiple package is ready.

13. Method according to claim 12, wherein the next supporting member is placed on the preceding package after its top layer has been wrapped and wherein the web-shaped material is interrupted.

## Patentansprüche

1. Vorrichtung (101) zum Anordnen bzw. Entfernen einer Menge von Objekten, wie etwa Schachteln, auf und/oder von einem Stützelement, wie etwa einer Palette (P), umfassend ein Gestell (102) mit Pfosten und Trägern, die durch die Pfosten gestützt sind, wobei die Träger eine Führung für einen Schlitten (109), auf dem ein Aufstellungsgerät (106) angeordnet ist, stützen, wobei die Führung gemäß eine Strecke verläuft, die sich über zumindest einer ersten Arbeitsstation und zumindest einer zweiten Arbeitsstation, welche horizontal von der ersten Arbeitsstation beabstandet ist, erstreckt, wobei die Vorrichtung an der Stelle der zumindest einen ersten Arbeitsstation eine erste Stütze (152) für einen Stapel von Stützelemente umfasst und an der Stelle der zumindest einen zweiten Arbeitsstation eine zweite Stütze (132) für ein Stützelement umfasst, **dadurch gekennzeichnet, dass** das Aufstellungsgerät (106) ein Aufnahmeelement (112) für die Objekte zum Aufnehmen der Objekte von einer Zufuhr (120b) und Aufstellen derselben auf einem Stützelement (P) oder einer Schicht von Objekten, die vorher darauf angeordnet wurden, bzw. zum Entfernen derselben davon und Überführen derselben zu einer Abführ, wobei das Aufnahmeelement in X-, Y- und Z-Richtung beweglich ist und zum Halten eines Stützelementes während der Versetzung vom Stapel von Stützelementen zur zweiten Stütze bzw. umgekehrt geeignet ist, und dass die Vorrichtung an der Stelle der zweiten Arbeitsstation mit einem Umwicklungsgerät (117) mit einem bahnförmigen Material, wie etwa einer Folie oder dergleichen, zum Befestigen und Umhüllen der Objekte auf dem Stützelement, das durch die zweite Stütze (132) getragen ist, und einem Träger/einer Führung (115), der/die durch das Gestell getragen ist, für das Umwicklungsgerät versehen ist, wobei der Träger/die Führung eine umlaufende Strecke definiert, den entlang das Umwicklungsgerät zirkuliert, wobei die Vorrichtung mit einem zweiten Hebegerät (131) zum Anheben der zweiten Stütze versehen ist, wobei der Träger/die Führung derart im Gestell angeordnet ist, dass er/sie ortsfest ist, wobei sich der Träger/die Führung in der oberen Hälfte des Gestells (oberen Bereich) befindet, und wobei das zweite Hebegerät zum Anheben der zweiten Stütze hinauf in die obere Hälfte des Gestells (oberer Bereich) geeignet ist.

2. Vorrichtung nach Anspruch 1, versehen mit einem ersten Hebegerät zum Anheben bzw. Absenken der ersten Stütze, wobei das erste Hebegerät vorzugsweise zum Anheben der ersten Stütze hinauf in die obere Hälfte (oberer Bereich) des Gestells, beispielsweise bis auf eine Höhe von ungefähr zwei Dritteln der Länge der benachbarten Pfosten, geeignet ist.

3. Vorrichtung nach einem der Ansprüche 1 oder 2, wobei das zweite Hebegerät zum Anheben der zweiten Stütze bis auf eine Höhe von ungefähr zwei Dritteln der Länge der benachbarten Pfosten geeignet ist.

4. Vorrichtung nach einem der vorhergehenden Ansprüche, wobei sich die erste und zweite Arbeitsstation innerhalb der Pfosten befinden.

5. Vorrichtung nach einem der vorhergehenden Ansprüche, wobei der Träger/die Führung bis zu einer Höhe von ungefähr zwei Dritteln der Länge der benachbarten Pfosten angeordnet ist.

6. Vorrichtung nach einem der vorhergehenden Ansprüche, umfassend eine Zufuhr zum Versehen des Aufnahmeelementes mit Objekten an einer Stelle, der sich in der oberen Hälfte (oberer Bereich) befindet, zum Beispiel auf einer Höhe von ungefähr zwei Dritteln der Länge der benachbarten Pfosten, wobei vorzugsweise ein horizontaler Durchgang für das Aufnahmeelement mit einem Stützelement, das durch dieses gehalten ist, freigelassen ist.

7. Vorrichtung nach einem der vorhergehenden Ansprüche, wobei die Zufuhr an einer Stelle endet, die sich im Wesentlichen zwischen der ersten und zweiten Arbeitsstation befindet.

8. Vorrichtung nach einem der vorhergehenden Ansprüche, wobei das Aufnahmeelement Saugnäpfe umfasst.

9. Vorrichtung nach einem der vorhergehenden Ansprüche, versehen von zwei oder mehr erste Arbeitsstationen mit ihre eigenen ersten Stützen.

10. Verfahren zum Anordnen einer Menge von Objekten auf einem Stützelement, wie etwa einer Palette, folgende Schritte umfassend:
a. Bereithalten eines gestapelten Vorrats von Stützelementen an einer ersten Stütze;
b. Bereithalten einer zweiten Stütze für ein Stützelement in einem ersten Abstand über einer festen Basis, wobei die zweite Stütze horizontal von der ersten Stütze beabstandet ist;
c. Aufnehmen des oberen, ersten Stützelementes vom gestapelten Vorrat unter Benutzung eines Aufnahmeelementes, das in X-, Y- und Z-Richtung beweglich ist;
d. Überführen des ersten Stützelementes zur zweiten Stütze unter Benutzung des Aufnahmeelementes und Anordnen des ersten Stützelementes auf der zweiten Stütze;
e. Aufnehmen von einem oder mehr der Objekte von einer Zufuhr unter Benutzung des Aufnahmeelementes, Überführen des Objekts zum ersten Stützelement auf der zweiten Stütze unter Benutzung des Aufnahmeelementes und Aufstellen der Objekte auf dem ersten Stützelement;
f. Ausführen von Schritt e, bis eine gewünschte Schicht von Objekten auf dem ersten Stützelement geformt wurde;
g. Absenken der zweiten Stütze über eine bestimmte Höhe;
h. Wiederholen von Schritt e, f und g, soweit nötig für die Ausbildung von anschließende Schichte von Objekten zum Ausbilden einer ersten beabsichtigten Verpackung von erstem Stützelement und Objekten, die darauf gestapelt sind;
i. Entfernen der ersten Verpackung von der zweiten Stütze;
j. Aufnehmen des zu diesem Zeitpunkt oberen, nächsten Stützelementes vom gestapelten Vorrat unter Benutzung des Aufnahmeelementes;
k. Wiederholen von Schritt d bis i zum formen einer Verpackung mit dem nächsten Stützelement;
l. Wiederholen von Schritt j und k für jede nächste herzustellende Verpackung,
wobei die Verpackung vor ihrer Entfernung vom zweiten Stützelement in Schritt i in ein bahnförmiges Material gewickelt wird, wie etwa eine Folie, wobei das Wickeln der Verpackung vorzugsweise in Abschnitten stattfindet, angepasst an das Formen jeder Schicht von Objekten, wobei das Wickeln vorzugsweise in Schritt g, vorzugsweise während Schritt g, stattfindet.
wobei das Wickeln unter Benutzung eines Umwicklungsgeräts stattfindet, das auf einer ortsfesten Führung zirkuliert, und
wobei sich jedes Stützelement von der Oberseite nach unten durch die Führung bewegt.

11. Verfahren nach Anspruch 10, wobei die erste Stütze vor Schritt j angehoben wird, vorzugsweise über eine Höhe des Stützelementes.

12. Verfahren nach einem der Ansprüche 10 oder 11, wobei nach Schritt h das zu diesem Zeitpunkt obere, nächste Stützelement unter Benutzung des Aufnahmeelementes vom gestapelten Vorrat aufgenommen und auf die obere Schicht von Objekten der geformten Verpackung angeordnet wird, wonach die Schritte e bis h zum Formen, auf der vorher geformten Verpackung, einer nächsten Packung mit dem nächsten Stützelement wiederholt werden, wobei Schritt i vorzugsweise ausgeführt wird, nachdem die Mehrfachverpackung bereit ist.

13. Verfahren nach Anspruch 12, wobei das nächste Stützelement auf der vorhergehenden Verpackung angeordnet wird, nachdem ihre obere Schicht umwickelt wurde, und wobei das bahnförmige Material unterbrochen wird.

## Revendications

1. Machine (101) pour placer ou enlever, respectivement, une quantité d'objets, tels que des caisses, sur et/ou d'un élément de support, tel qu'une palette (P), comprenant un cadre (102) présentant des montants et des poutres supportées par les montants, dans laquelle les poutres supportent un guide pour un chariot (109) sur lequel un dispositif de placement (106) a été agencé, dans laquelle le guide s'étend selon un chemin qui est situé au-dessus d'au moins une première station de travail et au moins une deuxième station de travail disposées de façon horizontalement espacée de la première station de travail, dans laquelle à l'endroit de ladite au moins une première station de travail, la machine comprend un premier support (152) pour une piler d'éléments de support et, à l'endroit de ladite au moins une deuxième station de travail, elle comprend un deuxième support (132) pour un élément de support, **caractérisée en ce que** le dispositif de placement (106) comprend un élément de saisie (112) pour les objets afin de saisir les objets à partir d'une alimentation (120b) et de placer ceux-ci sur un élément de support (P) ou sur une couche d'objets précédemment placés sur celui-ci, ou de les enlever de celui-ci et de les transférer vers une décharge, respectivement, dans laquelle l'élément de saisie est mobile dans les directions X, Y et Z et est adapté pour retenir un élément de support pendant son déplacement à partir de la pile d'éléments de support jusqu'au deuxième support, et vice versa, respectivement, et **en ce que**, à l'endroit de la deuxième station de travail, la machine est équipée d'un dispositif d'enveloppement (117) afin, avec une matière de type toile, telle qu'un film ou analogue, de fixer et d'envelopper les objets sur l'élément de support porté par le deuxième support (132), et un support/guide (115) pour le dispositif d'enveloppement porté par le cadre, ledit support/guide définissant un chemin circonférentiel le long duquel le dispositif d'enveloppement circule, dans laquelle la machine est équipée d'un deuxième dispositif de levage (131) pour lever le deuxième support, dans laquelle le support/guide a été agencé dans le cadre de manière à être stationnaire, dans laquelle le support/guide est situé dans la moitié supérieure (la région supérieure) du cadre, et dans laquelle le deuxième dispositif de levage est adapté pour lever le deuxième support jusque dans la moitié supérieure (la région supérieure) du cadre.

2. Machine selon la revendication 1, comprenant un premier dispositif de levage pour lever ou abaisser, respectivement, le premier support, dans laquelle, de préférence, le premier dispositif de levage est adapté pour lever le premier support jusque dans la moitié supérieure (la région supérieure) du cadre, par exemple jusqu'à une hauteur qui correspond approximativement aux 2/3 de la longueur des montants adjacents.

3. Machine selon la revendication 1 ou 2, dans laquelle le deuxième dispositif de levage est adapté pour lever le deuxième support jusqu'à une hauteur qui correspond approximativement aux 2/3 de la longueur des montants adjacents.

4. Machine selon l'une quelconque des revendications précédentes, dans laquelle les première et deuxième stations de travail sont situées à l'intérieur des montants.

5. Machine selon l'une quelconque des revendications précédentes, dans laquelle le support/guide est situé à une hauteur qui correspond approximativement aux 2/3 de la longueur des montants adjacents.

6. Machine selon l'une quelconque des revendications précédentes, comprenant une alimentation pour présenter les objets à l'élément de saisie en un endroit qui est situé dans la moitié supérieure (la région supérieure), par exemple à une hauteur qui correspond approximativement aux 2/3 de la longueur des montants adjacents, de préférence en laissant libre un passage horizontal pour l'élément de saisie avec un élément de support retenu par celui-ci.

7. Machine selon l'une quelconque des revendications précédentes, dans laquelle l'alimentation se termine à un endroit qui est sensiblement situé entre les première et deuxième stations de travail.

8. Machine selon l'une quelconque des revendications précédentes, dans laquelle les éléments de saisie comprennent des ventouses.

9. Machine selon l'une quelconque des revendications précédentes, dans laquelle deux ou plus de deux premières stations de travail pourvues de leurs propres premiers supports sont prévues.

10. Procédé pour placer une quantité d'objets sur un élément de support, tel qu'une palette, comprenant les étapes suivantes:
a. maintenir un stock empilé d'éléments de support prêts sur un premier support;
b. maintenir un deuxième support pour un élément de support prêt à une première distance au-dessus d'une base solide, ledit deuxième support étant espacé horizontalement du premier support;
c. saisir le premier élément de support supérieur dans le stock empilé en utilisant un élément de saisie entraîné qui est mobile dans les directions X, Y et Z;
d. transférer le premier élément de support au deuxième support en utilisant l'élément de saisie, et placer le premier élément de support sur le deuxième support;
e. saisir un ou plusieurs des objets à partir d'une alimentation en utilisant l'élément de saisie, transférer lesdits objets au premier élément de support sur le deuxième support en utilisant l'élément de saisie, et placer lesdits objets sur le premier élément de support;
f. exécuter l'étape e jusqu'à ce qu'une couche souhaitée d'objets ait été formée sur le premier élément de support;
g. abaisser le deuxième support d'une certaine hauteur;
h. répéter les étapes e, f et g aussi longtemps que la formation de couches subséquentes d'objets est nécessaire pour former un premier emballage souhaité du premier élément de support et d'objets empilés sur celui-ci;
i. enlever le premier emballage du deuxième support;
j. saisir l'élément de support suivant à cet instant supérieur dans le stock empilé en utilisant l'élément de saisie;
k. répéter les étapes d à i pour former un emballage avec ledit élément de support suivant;
l. répéter les étapes j et k pour chaque emballage suivant à former,
dans lequel l'emballage, avant d'être enlevé du deuxième support à l'étape i, est enveloppé dans une matière de type toile, telle qu'un film, dans lequel, de préférence, l'enveloppement de l'emballage est réalisé par parties, ajustées pour former chaque couche d'objets, dans lequel, de préférence, l'enveloppement est réalisé à l'étape g, de préférence pendant l'étape g,
dans lequel l'enveloppement est réalisé en utilisant une enveloppeuse circulant sur un guide stationnaire, et
dans lequel chaque élément de support se déplace de haut en bas à travers le guide.

11. Procédé selon la revendication 10, dans lequel, avant l'étape j, le premier support est levé, de préférence d'une hauteur de l'élément de support.

12. Procédé selon l'une quelconque des revendications 10 ou 11, dans lequel, après l'étape h, l'élément de support suivant à cet instant supérieur est saisi dans le stock empilé en utilisant l'élément de saisie et est placé sur la couche supérieure d'objets de l'emballage formé, et ensuite les étapes e à h sont répétées pour former, sur l'emballage précédemment formé, un emballage suivant avec ledit élément de support suivant, dans lequel, de préférence, l'étape i est exécutée une fois que l'emballage multiple est prêt.

13. Procédé selon la revendication 12, dans lequel l'élément de support suivant est placé sur l'emballage précédent après que sa couche supérieure ait été enveloppée, et dans lequel la matière de type toile est interrompue.
